# FASCICULE DE BREVET EUROPEEN

(11) **EP 1 700 513 B1**
(45) Date de publication et mention de la délivrance du brevet: **19.08.2009**
(21) Numéro de dépôt: 04816454.5
(22) Date de dépôt: 21.12.2004
(51) Int. Cl.: H04Q 11/04, H04L 5/02

(54) **SYSTEME DE TRANSMISSION A TRES HAUT DEBIT**
SCHNELLES ÜBERTRAGUNGSSYSTEM
HIGH-SPEED TRANSMISSION SYSTEM

(30) Priorité: 23.12.2003 FR 0315221
(43) Date de publication de la demande: 13.09.2006
(73) Titulaire: Ifotec, 38500 Voiron (FR)
(72) Inventeur: BILLET, Gilles, F-38500 Voiron (FR); SILLANS, Christian, F-38260 La Frette (FR)
(74) Mandataire: Jouvray, Marie-Andrée
(86) Numéro de dépôt international: PCT/FR2004/003322
(87) Numéro de publication internationale: WO 2005/072003

(56) Documents cités:
- EP-A- 1 176 837
- "Asymmetric Digital Subscriber Line (ADSL) transceivers - Extended bandwidth ADSL2 (ADSL2+); ITU-T Recommendation G.992.5" mai 2003 (2003-05), INTERNATIONAL TELECOMMUNICATION UNION , CH , XP002294141 alinéa [B.1.2]; figure B.1

## Description

### Domaine technique de l'invention

L'invention concerne un système de transmission à haut débit de signaux, de type DSL, entre un boîtier de central et une pluralité d'abonnés, comportant un boîtier délocalisé connecté au boîtier de central par l'intermédiaire d'une connexion optique et aux abonnés par des lignes téléphoniques, les signaux descendants, transmis du boîtier de central à au moins un abonné, ayant une amplitude prédéterminée dans une bande de fréquence prédéterminée.

### État de la technique

L'utilisation de lignes téléphoniques classiques, généralement constituées par des paires de fils de cuivre torsadées, pour la transmission numérique à haut débit de signaux, de type DSL ("Digital Suscriber Line" ou ligne d'accès numérique), est limitée en fréquence et/ou en débit et/ou en portée par la dégradation des signaux dans les lignes téléphoniques. En effet, la bande passante des lignes téléphoniques classiques est comprise entre 300Hz et 4,5KHz, tandis que la bande passante des signaux haut débit est actuellement comprise entre 30KHz et 1,1 MHz. Dans les lignes téléphoniques, les pertes, en fonction de la distance, augmentant avec la fréquence, la distance entre un multiplexeur d'accès DSL (DSLAM ou "digital suscriber line access multiplexer") d'un boîtier de central fournissant des accès numériques haut débit et un abonné ne peut guère, en pratique, dépasser 1,5km, ce qui a longtemps limité l'utilisation des accès haut débit aux zones urbaines.

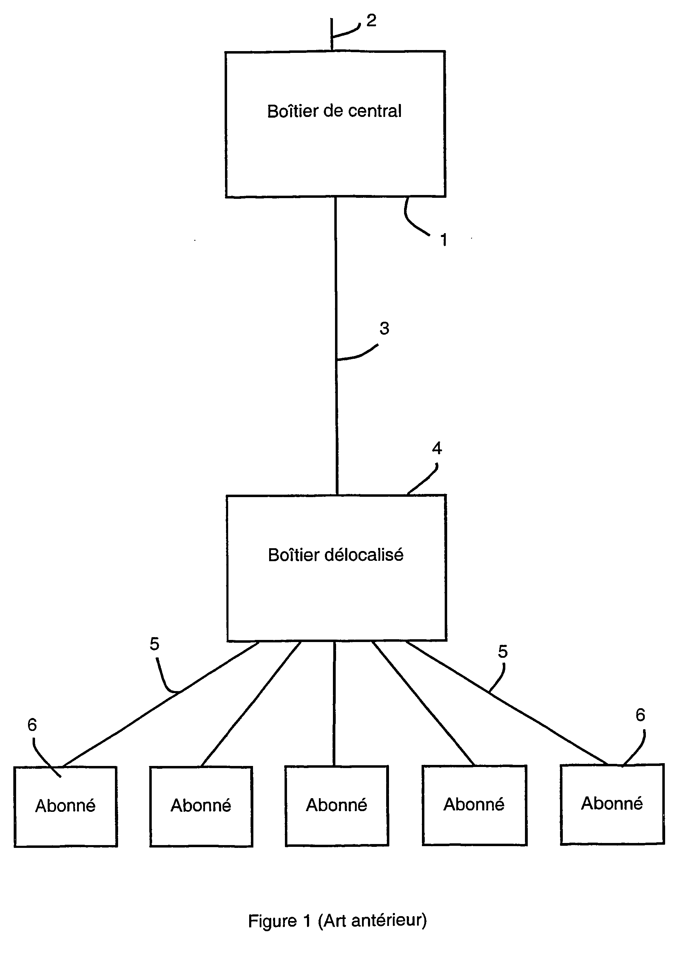

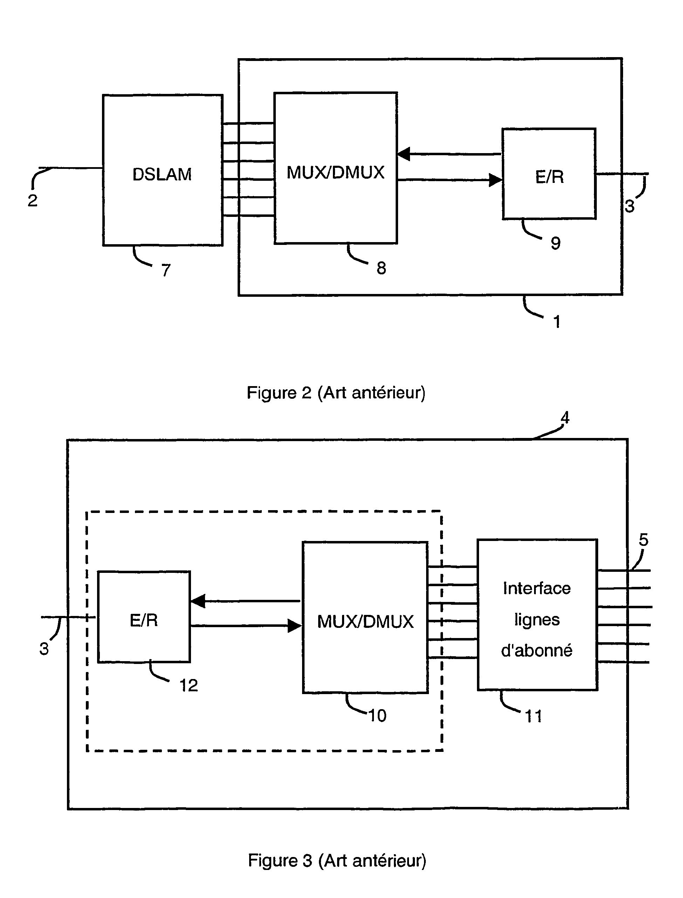

Il a été proposé, notamment dans les demandes de brevet EP-A-1176837 et WO-A-02/078269, d'augmenter la portée des systèmes de transmission de type DSL en combinant l'utilisation de fibres optiques et de lignes téléphoniques classiques. Comme représenté à la figure 1, un boîtier de central 1, connecté à une liaison numérique haut débit 2, est alors connecté par une liaison par fibre optique 3 à un boîtier délocalisé 4. Celui-ci est alors connecté par des lignes téléphoniques classiques 5 à des abonnés 6. Comme représenté à la figure 2, dans le boîtier de central 1, un multiplexeur d'accès DSL 7 (DSLAM ou "digital suscriber line access multiplexer"), qui transmet classiquement au boîtier de central des signaux haut débit par une pluralité d'entrées/sorties haut débit, est connecté à la liaison par fibre optique 3 par l'intermédiaire d'une interface 8 (MUX/DMUX) multiplexant les signaux descendants, c'est-à-dire les signaux en direction des abonnés, et démultiplexant les signaux montants, c'est-à-dire les signaux en provenance des abonnés. Un circuit émetteur/récepteur optique 9 est connecté entre l'interface 8 et la liaison par fibre optique 3. Comme représenté à la figure 3, dans le boîtier délocalisé 4, les signaux descendants transmis par la liaison par fibre optique 3 sont démultiplexés dans une interface 10 (MUX/DMUX), de manière à fournir des signaux, de type DSL, aux abonnés 6 par l'intermédiaire d'une interface de lignes d'abonné 11 et des lignes téléphoniques classiques 5. De manière analogue, les signaux montants en provenance des abonnés sont multiplexés dans l'interface 10 du boîtier délocalisé 4 avant d'être transmis au boîtier de central 1 par la liaison par fibre optique 3. Un circuit émetteur/récepteur optique 12 est connecté dans le boîtier d'abonné 4 entre l'interface 10 (MUX/DMUX) et la liaison par fibre optique 3.

Dans le document EP-A-1176837, le boîtier de central 1 et le boîtier délocalisé 4 réalisent un multiplexage/démultiplexage temporel (TDM ou "time division multiplex") aussi bien pour les signaux numériques descendants que pour les signaux numériques montants.

Dans le document WO-A-02/078269, un multiplexage/démultiplexage fréquentiel (FDM ou "frequency division multiplex") est utilisé pour les signaux montants, de préférence avec modulation en fréquence ou en amplitude des porteuses, ainsi que pour les signaux descendants.

Dans les systèmes mentionnés ci-dessus, la bande passante des signaux DSL est limitée à 1,1MHz.

Le débit dans le sens descendant est généralement très supérieur au débit de la voie montante. À titre d'exemple, certains systèmes de transmission haut débit, de type ADSL (ligne d'accès numérique à débit asymétrique), permettent un débit maximal de l'ordre de 1 Mbit/s dans le sens montant, c'est-à-dire en provenance des abonnés, pour un débit de l'ordre de 8Mbits/s dans le sens descendant, c'est-à-dire en direction des abonnés.

Il est, par ailleurs, proposé, sous la dénomination ADSL2+, d'étendre la bande de fréquence des signaux descendants jusqu'à 2,2MHz et, ainsi, de doubler le débit et d'atteindre au moins 16Mbits/s dans le sens descendant pour les abonnés les plus proches du boîtier de central. Cependant, les pertes dans les lignes d'abonné augmentant avec la fréquence, ce passage au très haut débit par doublement de la bande passante dans le sens descendant a pour contrepartie une réduction de la portée de transmission dans les systèmes de transmission classiques utilisant les lignes d'abonné. À débit égal, le doublement de la bande passante permet d'augmenter la portée du système, sans toutefois avoir d'influence pour les abonnés les plus éloignés.

### Objet de l'invention

L'invention a pour but de surmonter les inconvénients des systèmes connus et plus particulièrement d'améliorer la transmission de signaux à très haut débit entre un boîtier de central et des abonnés connectés à des lignes téléphoniques.

Selon l'invention, ce but est atteint par les revendications annexées et plus particulièrement par le fait que le boîtier de central comporte des moyens d'amplification des signaux descendants dont la fréquence est supérieure à un premier seuil prédéterminé, avec un coefficient d'amplification variable en fonction de la fréquence, de manière à compenser l'atténuation de ces signaux, le boîtier délocalisé comportant des moyens d'atténuation des signaux descendants qu'il reçoit dont la fréquence est supérieure audit seuil, avec un coefficient d'atténuation complémentaire du coefficient d'amplification, de manière à transmettre sur les lignes téléphoniques des signaux atténués au-dessus dudit premier seuil de fréquence.

Selon un développement de l'invention, le coefficient d'amplification a une première valeur lorsque la fréquence des signaux descendants est comprise entre le premier seuil et un second seuil prédéterminé, supérieur au premier et une seconde valeur, inférieure à la première valeur, lorsque la fréquence des signaux descendants est supérieure au second seuil.

Selon un autre développement de l'invention, le boîtier de central comporte des moyens de multiplexage temporel des signaux descendants, le boîtier délocalisé comportant des moyens de démultiplexage correspondants. Les moyens d'atténuation des signaux descendants peuvent alors être intégrés dans un filtre de reconstruction, disposé en aval d'un convertisseur numérique/analogique, connecté aux moyens de démultiplexage du boîtier délocalisé. Le filtre de reconstruction comporte alors une pente variant avec la fréquence, de manière à atténuer les signaux descendants selon ledit coefficient d'atténuation.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un système de transmission selon l'art antérieur, combinant l'utilisation de fibres optiques et de lignes téléphoniques classiques.
Les figures 2 et 3 représentent, schématiquement, respectivement un boîtier de central et un boîtier délocalisé d'un système selon la figure 1.
La figure 4 illustre, en fonction de la fréquence, l'amplitude des signaux à transmettre sur les lignes téléphoniques d'un système de transmission à très haut débit.
Les figures 5 et 6 représentent, schématiquement, respectivement un boîtier de central et un boîtier délocalisé d'un système selon l'invention.
La figure 7 illustre une variante de réalisation de la voie descendante du boîtier délocalisé d'un système selon l'invention.
La figure 8 illustre les caractéristiques d'un filtre de reconstruction respectivement selon la figure 7 (courbe A) et selon l'art antérieur (courbe B, en pointillé).

### Description de modes particuliers de réalisation

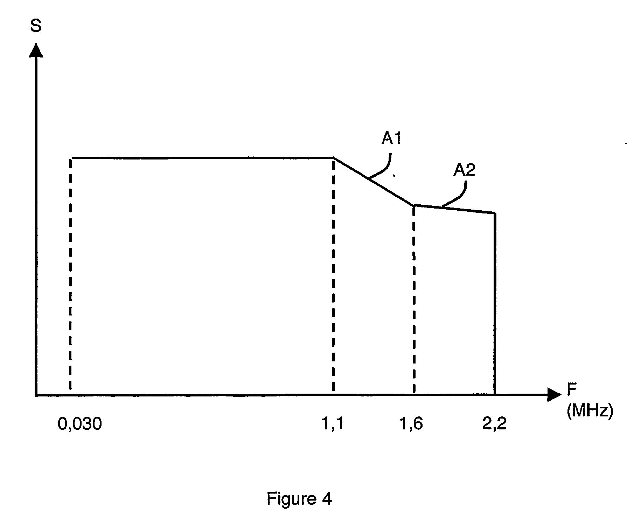

Comme représenté à la figure 4, dans un système de transmission à très haut débit, notamment de type ADSL2+, il est recommandé d'affaiblir l'amplitude des signaux S dont la fréquence est supérieure à 1,1MHz pour limiter les perturbations dues à des interférences entre les signaux transmis sur des lignes téléphoniques voisines. La normalisation prévoit d'imposer, pour les transmissions à très haut débit par lignes téléphoniques, un affaiblissement des signaux fournis par le multiplexeur d'accès DSL 7 (DSLAM) au boîtier de central, avec un coefficient d'affaiblissement A1 de -18dB/octave dans une première bande de fréquence, comprise entre 1,104MHz et 1,622MHz, et un coefficient d'affaiblissement A2 de -3dB/octave dans une seconde bande de fréquence, comprise entre 1,622MHz et 2,208MHz. Entre 25,875KHz et 1,104MHz, la norme prévoit une densité spectrale prédéterminée de l'ordre de - 36,5dBm/Hz.

Cet affaiblissement des signaux de l'ordre de 10dB entre 1,1MHz et 2,2MHz affecte le signal sur bruit de la transmission. De plus, dans le cas d'une transmission numérique, il est alors nécessaire d'améliorer la finesse d'échantillonnage et, en conséquence, d'utiliser des circuits plus complexes.

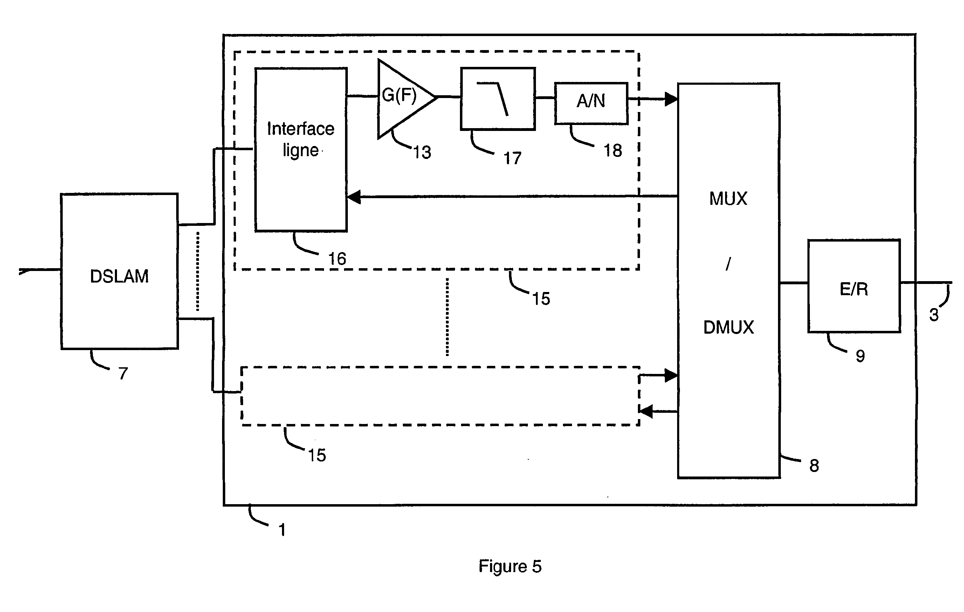

Comme représenté à la figure 5, le boîtier de central 1 d'un système selon l'invention comporte dans chaque voie descendante, en amont de l'interface 8 multiplexant les signaux descendants, un amplificateur 13 destiné à compenser l'atténuation préalable des signaux descendants fournis par le DSLAM 7 et dont la fréquence est supérieure à 1,1MHz. Ainsi, chaque amplificateur 13, disposé dans une voie descendante entre le DSLAM 7 et l'interface 8 multiplexant les signaux descendants, a un coefficient d'amplification G(F) variable en fonction de la fréquence, de manière à effectuer une préaccentuation des signaux descendants avant leur transmission par la liaison à fibre optique 3. Dans le cas d'un système de transmission à très haut débit de type ADSL2+, ayant une bande passante comprise entre environ 30KHz et environ 2,2MHz, le coefficient d'amplification G(F) a une première valeur G1 (F), de l'ordre de 18dB/octave, entre 1,1MHz et 1,6MHz et une seconde valeur G2(F), inférieure à la première et de l'ordre de 3dB/octave, au-dessus de 1,6MHz. Dans cet exemple particulier, le seuil de fréquence (1,1 MHz) à partir duquel les signaux descendants sont préaccentués est situé sensiblement au milieu de la bande de fréquence des signaux descendants.

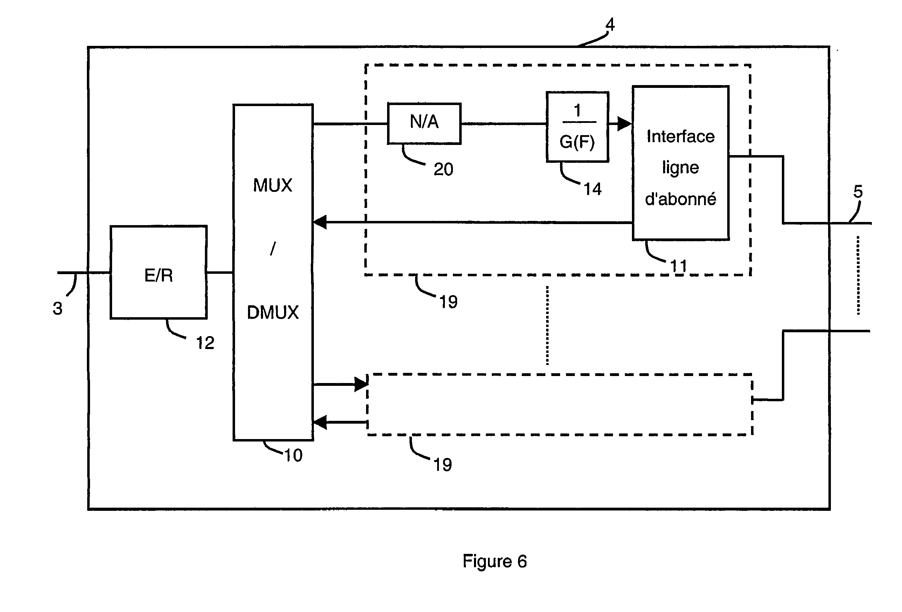

Comme représenté à la figure 6, le boîtier délocalisé 4 comporte alors dans chaque voie descendante, en aval de l'interface 10 démultiplexant les signaux descendants, un atténuateur 14, avec un coefficient d'atténuation 1/G(F) complémentaire du coefficient d'amplification G(F), de manière à transmettre sur les lignes téléphoniques 5 des signaux atténués conformément à la norme en cours d'élaboration lorsque leur fréquence est supérieure à 1,1MHz. Ainsi, chaque atténuateur 14, disposé dans une voie descendante entre l'interface 10 démultiplexant les signaux descendants et une interface de ligne d'abonné 11, a un coefficient d'atténuation 1/G(F) variable en fonction de la fréquence.

L'affaiblissement des signaux descendants lié à l'extension de la bande passante n'a ainsi pas d'influence sur la capacité de transmission de la liaison par fibre optique.

Le système peut utiliser tout type de multiplexage/démultiplexage dans les interfaces 8 et 10. Dans le mode particulier de réalisation illustré aux figures 5 et 6, les signaux transmis par la liaison par fibre optique 3 sont des signaux numériques et le multiplexage/démultiplexage, dans les interfaces 8 et 10, est de type temporel, aussi bien pour les signaux montants que pour les signaux descendants.

Le boîtier de central comporte classiquement, pour chaque ligne, un circuit de ligne 15 disposé entre une entrée/sortie du DSLAM et des entrées/sorties de l'interface 8 (MUX/DMUX). Chaque circuit de ligne 15 comporte une interface de ligne 16, ayant une entrée recevant les signaux montants correspondants, en provenance de l'interface 8, et une sortie envoyant les signaux descendants à l'interface 8. Sur la figure 5, seuls les éléments principaux d'un des circuits de ligne 15 qui sont disposés dans le sens descendant entre l'interface de ligne 16 et l'interface 8 sont représentés, les autres éléments du circuit de ligne 15 pouvant être de type connu. Ainsi, le circuit de ligne 15 comporte en série, dans le sens descendant, l'amplificateur 13, un filtre anti-repliement 17 et un convertisseur analogique/numérique 18.

De manière analogue, le boîtier délocalisé 4 de la figure 6 comporte, pour chaque ligne, un circuit de ligne 19 disposé entre une ligne téléphonique 5 et des entrées/sorties de l'interface 10 (MUX/DMUX). Chaque circuit de ligne 19 comporte une interface de ligne d'abonné 11, ayant une sortie envoyant les signaux montants correspondants à l'interface 10 et une entrée recevant les signaux descendants, en provenance de l'interface 10. Sur la figure 6, seuls les éléments principaux d'un des circuits de ligne 19 qui sont disposés dans le sens descendant entre l'interface 10 et l'interface de ligne d'abonné 11 sont représentés, les autres éléments du circuit de ligne 19 pouvant être de type connu. Ainsi, le circuit de ligne 19 comporte en série, dans le sens descendant, un convertisseur numérique/analogique 20 et l'atténuateur 14.

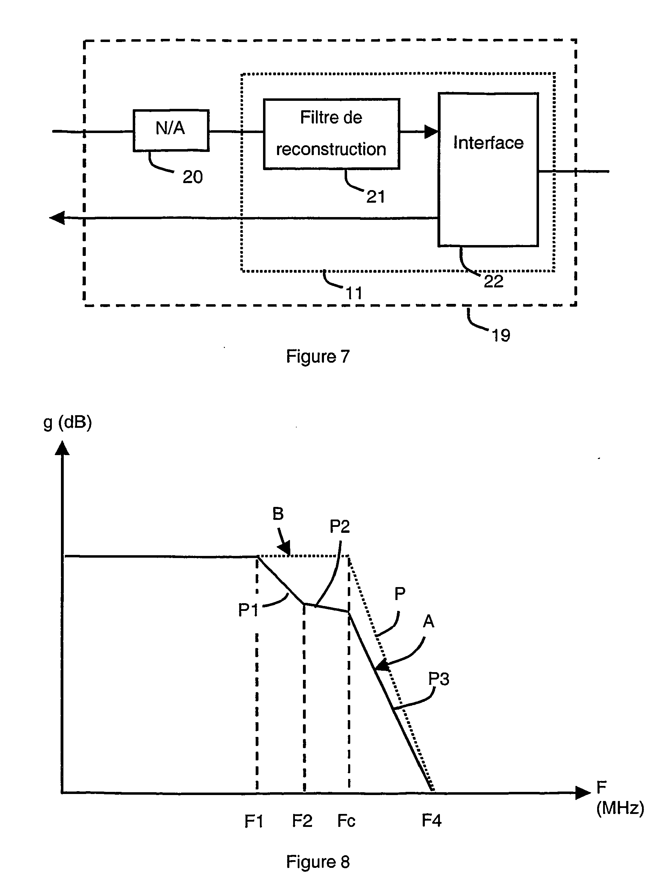

Dans une variante de réalisation préférentielle, illustrée à la figure 7, le circuit de ligne 19 du boîtier délocalisé est simplifié. En effet, une interface de ligne d'abonné 11 du boîtier délocalisé 4 comporte classiquement un filtre de reconstruction 21 connecté entre le convertisseur numérique/analogique 20 et une interface 22. Un tel filtre est notamment destiné à limiter le spectre de fréquences indésirables et éliminer les fréquences images qui peuvent, notamment, être créées par les convertisseurs.

Le filtre de reconstruction 21 est modifié de manière à intégrer l'atténuateur 14 dans l'interface de ligne d'abonné 11. Comme illustré par la courbe A (en traits pleins), illustrant le gain g (en dB) du filtre de reconstruction 21, ainsi modifié, en fonction de la fréquence F, le filtre de reconstruction 21 est, dans l'exemple représenté, un filtre passe-bas comportant trois pentes successives P1, P2 et P3. Dans l'exemple ci-dessus d'un système de transmission de type ADSL2+ (bande passante comprise entre environ 30KHz et environ 2,2MHz), dont les amplificateurs 13 ont un premier coefficient d'amplification G1 (F) entre 1,1 MHz et 1,6MHz et un second coefficient d'amplification G2(F) au-dessus de 1,6MHz, les pentes P1 et P2 correspondent respectivement à des coefficients d'atténuation complémentaires 1/G1 (F) entre les fréquences F1=1,1MHz et F2=1,6MHz et 1/G2(F) entre la fréquence F2 et la fréquence de coupure Fc=2,2MHz. La pente P3 du filtre de reconstruction 21 au-dessus de la fréquence de coupure Fc, plus accentuée que les pentes P1 et P2, est néanmoins plus faible que la pente P correspondante d'un filtre de reconstruction passe-bas d'un système connu, dont les caractéristiques sont illustrées en pointillé sur la figure 8 (courbe B). En effet, la pente P3 du filtre de reconstruction 21, modifié comme indiqué ci-dessus pour intégrer l'atténuateur 14, permet d'atteindre, à une fréquence F4, par exemple à 3,75MHz, supérieure à la fréquence de coupure Fc, la même atténuation qu'un filtre passe-bas de pente P supérieure car la valeur du gain g du filtre est plus faible à la fréquence de coupure Fc. La diminution de la pente du filtre au-delà de la fréquence de coupure Fc permet de simplifier la structure du filtre de reconstruction. À titre d'exemple non limitatif la pente P3 peut être de l'ordre de -63dB/octave.

Le nombre de ruptures de pente du filtre de reconstruction 21, les différentes valeurs de ladite pente dans la bande de fréquences utiles (au-dessous de la fréquence de coupure Fc) ainsi que les seuils (F1, F2 et Fc) déclenchant une rupture de pente sont fonction de l'atténuation 1/G(F) désirée.

L'intégration de l'atténuateur 14 dans le filtre de reconstruction 21 est d'autant plus intéressante que la bande passante est plus large. Il est actuellement envisagé d'élargir la bande passante des systèmes ADSL+ jusqu'à des fréquences de l'ordre de 12MHz. La normalisation imposerait alors, de plus, un affaiblissement des signaux fournis par le DSLAM 7 dans le boîtier du central avec un coefficient d'affaiblissement de -65dB/octave entre 2,208MHz et 2,5MHz, de -78dB/octave entre 2,5MHz et 3,0025MHz, etc. jusquà 12MHz.. Le coefficient d'amplification G(F) des amplificateurs 13 prend alors plus de deux valeurs successives, fonction des affaiblissements prévus par la norme et les filtres de reconstruction 21 ont des pentes modifiées en conséquence en fonction de la fréquence.

Un multiplexage/démultiplexage fréquentiel, de préférence avec des porteuses modulées en fréquence, peut éventuellement être utilisé, aussi bien dans le sens montant que dans le sens descendant. Dans ce cas, le filtre anti-repliement 17 et le convertisseur analogique-numérique 18 du circuit 15 de la figure 5 sont supprimés et remplacés par un modulateur et l'interface de ligne d'abonné 11 du boîtier délocalisé ne comporte pas de filtre de reconstruction. L'atténuateur 14 n'est alors pas intégré dans un filtre de reconstruction.

Il est également envisageable de combiner un multiplexage/démultiplexage fréquentiel dans le sens descendant et un multiplexage/démultiplexage temporel dans le sens montant.

L'invention n'est pas limitée aux modes de réalisation particulier décrits ci-dessus. En particulier, la valeur du seuil de fréquence au-delà duquel les signaux descendants sont préaccentués dans le boîtier central et réatténués dans le boîtier délocalisé peut être différent de 1,1 MHz. De même, les variations (pentes, nombre de ruptures de pente et seuils) des coefficients d'amplification et d'atténuation peuvent être différentes des valeurs particulières mentionnées ci-dessus et adaptées à tout type de système de transmission particulier.

## Revendications

1. Système de transmission à haut débit de signaux, de type DSL, entre un boîtier de central (1) et une pluralité d'abonnés (6), comportant un boîtier délocalisé (4) connecté au boîtier de central (1) par l'intermédiaire d'une connexion optique (3) et aux abonnés (6) par des lignes téléphoniques (5), les signaux descendants, transmis du boîtier de central (1) à au moins un abonné (6), ayant une amplitude prédéterminée dans une bande de fréquence prédéterminée, système **caractérisé en ce que** le boîtier de central (1) comporte des moyens (13) d'amplification des signaux descendants dont la fréquence est supérieure à un premier seuil prédéterminé, avec un coefficient d'amplification (G(F)) variable en fonction de la fréquence, de manière à compenser l'atténuation de ces signaux, le boîtier délocalisé (4) comportant des moyens (14) d'atténuation des signaux descendants qu'il reçoit dont la fréquence est supérieure audit seuil, avec un coefficient d'atténuation (1/G(F)) complémentaire du coefficient d'amplification, de manière à transmettre sur les lignes téléphoniques (5) des signaux atténués au-dessus dudit premier seuil de fréquence.

2. Système selon la revendication 1, **caractérisé en ce que** le premier seuil est sensiblement situé au milieu de la bande de fréquence des signaux descendants.

3. Système selon l'une des revendications 1 et 2, **caractérisé en ce que**, la bande de fréquence des signaux descendants étant comprise entre environ 30KHz et environ 2,2MHz, le premier seuil est de l'ordre de 1,1 MHz.

4. Système selon l'une quelconque des revendications 1 à 3, **caractérisé en ce que** le coefficient d'amplification (G(F)) a une première valeur lorsque la fréquence des signaux descendants est comprise entre le premier seuil et un second seuil prédéterminé, supérieur au premier et une seconde valeur, inférieure à la première valeur, lorsque la fréquence des signaux descendants est supérieure au second seuil.

5. Système selon la revendication 4, **caractérisé en ce que** le second seuil est de l'ordre de 1,6MHz.

6. Système selon l'une quelconque des revendications 4 et 5, **caractérisé en ce que** le coefficient d'amplification (G(F)) est de l'ordre de 18dB/octave entre les premier et second seuils.

7. Système selon l'une quelconque des revendications 4 à 6, **caractérisé en ce que** le coefficient d'amplification (G(F)) est de l'ordre de 3dB/octave au-dessus du second seuil.

8. Système selon l'une quelconque des revendications 1 à 7, **caractérisé en ce que** le boîtier de central (1) comporte des moyens (8) de multiplexage fréquentiel des signaux descendants, le boîtier délocalisé (4) comportant des moyens (10) de démultiplexage correspondants.

9. Système selon l'une quelconque des revendications 1 à 7, **caractérisé en ce que** le boîtier de central (1) comporte des moyens (8) de multiplexage temporel des signaux descendants, le boîtier délocalisé (4) comportant des moyens (10) de démultiplexage correspondants.

10. Système selon la revendication 9, **caractérisé en ce que** les moyens d'atténuation des signaux descendants sont intégrés dans un filtre de reconstruction (21), disposé en aval d'un convertisseur numérique/analogique (20), connecté aux moyens de démultiplexage (10) du boîtier délocalisé (4).

11. Système selon la revendication 10, **caractérisé en ce que** le filtre de reconstruction comporte une pente (P1, P2, P3) variant avec la fréquence, de manière à atténuer les signaux descendants selon ledit coefficient d'atténuation.

## Claims

1. High-speed signal transmission system, of DSL type, between a central box (1) and a plurality of subscribers (6), comprising a remote box (4) connected to the central box (1) by means of an optical connection (3) and to the subscribers (6) by telephone lines (5), the downstream signals transmitted from the central box (1) to at least one subscriber (6) having a preset amplitude in a preset frequency range, system **characterized in that** the central box (1) comprises means (13) for amplifying the downstream having a higher frequency than a first preset threshold with an amplification factor (G(F)) that is variable with the frequency so as to compensate attenuation of these signals, the remote box (4) comprising means (14) for attenuating the received downstream signals having a higher frequency than said threshold, with a complementary attenuation factor (1/G(F)) to the amplification factor, so as to transmit attenuated signals on the telephone lines (5) above the first frequency threshold.

2. System according to claim 1, **characterized in that** the first threshold is substantially situated in the middle of the frequency band of the downstream signals.

3. System according to one of claims 1 and 2, **characterized in that**, the frequency band of the downstream signals being comprised between about 30KHz and 2.2MHz, the first threshold is about 1.1 MHz.

4. System according to any one of claims 1 to 3, **characterized in that**, the amplification factor (G(F)) has a first value when the frequency of the downstream signals is comprised between the first threshold and a second preset threshold, higher than the first threshold, and a second value, lower than the first value, when the frequency of the downstream signals is higher than the second threshold.

5. System according to claim 1, **characterized in that** the second threshold is about 1.6MHz.

6. System according to either one of claims 4 and 5, **characterized in that** the amplification factor (G(F)) is about 18dB/octave between the first and second thresholds.

7. System according to any one of claims 4 to 6, **characterized in that** the amplification factor (G(F)) is about 3dB/octave above the second threshold.

8. System according to any one of claims 1 to 7, **characterized in that** the central box (1) comprises means (8) for frequency-division multiplexing of the downstream signals, the remote box (4) comprising corresponding demultiplexing means (10).

9. System according to any one of claims 1 to 7, **characterized in that** the central box (1) comprises means (8) for time-division multiplexing of the downstream signals, the remote box (4) comprising corresponding demultiplexing means (10).

10. System according to claim 9, **characterized in that** the downstream signal attenuation means are integrated in a reconstruction filter (21) arranged downline from a digital-to-analog converter (20) connected to the demultiplexing means (10) of the remote box (4).

11. System according to claim 10, **characterized in that** the reconstruction filter comprises a slope (P1, P2, P3) varying with the frequency so as to attenuate the downstream signals in accordance with said attenuation factor.

## Patentansprüche

1. Schnelles DSL Übertragungssystem zur Übertragung von Signalen zwischen einem zentralen Gehäuse (1) und einer Mehrzahl von Teilnehmern (6), das ein Fern-Gehäuse (4) umfasst, das mit dem zentralen Gehäuse (1) über eine optische Verbindung (3) und mit den Teilnehmern (6) über Telefonleitungen (5) verbunden ist, wobei die downstream-Signale, die vom Zentralgehäuse (1) an mindestens einen Teilnehmer (6) übertragen werden, eine vorbestimmte Amplitude in einem vorbestimmten Frequenzbereich haben, System, das **dadurch gekennzeichnet ist, dass** das zentrale Gehäuse (1) Mittel (13) zur Verstärkung der downstream-Signale umfasst, deren Frequenz über einem ersten vorbestimmten Schwellenwert liegt, mit einem Verstärkungskoeffizienten (G(F)), der in Abhängigkeit von der Frequenz variabel ist, um die Abschwächung dieser Signale zu kompensieren, wobei das Fern-Gehäuse (4) Mittel (14) zur Abschwächung der downstream-Signale umfasst, die es empfängt, deren Frequenz über dem genannten Schwellenwert liegt, mit einem zum Verstärkungskoeffizienten komplementären Abschwächungskoeffizienten (1/G(F)), um über die Telefonleitungen (5) über den ersten Frequenzschwellenwert abgeschwächte Signale zu übertragen.

2. System nach Anspruch 1, **dadurch gekennzeichnet, dass** der erste Schwellenwert ungefähr in der Mitte des Frequenzbereichs der downstream-Signale liegt.

3. System nach einem der Ansprüche 1 und 2, **dadurch gekennzeichnet, dass** der Frequenzbereich der downstream-Signale 30 KHz bis etwa 2,2 MHz beträgt und der erste Schwellenwert bei etwa 1,1 MHz liegt.

4. System nach einem der Ansprüche 1 bis 3, **dadurch gekennzeichnet, dass** der Verstärkungskoeffizient (G(F)) einen ersten Wert hat, wenn die Frequenz der downstream-Signale zwischen dem ersten und einem zweiten, vorbestimmten Schwellenwert liegt, der über dem ersten liegt, und einem zweiten Wert hat, der unter dem ersten Wert liegt, wenn die Frequenz der downstream-Signale über dem zweiten Schwellenwert liegt.

5. System nach Anspruch 4, **dadurch gekennzeichnet, dass** der zweite Schwellenwert etwa 1,6 MHz beträgt.

6. System nach einem der Ansprüche 4 und 5, **dadurch gekennzeichnet, dass** der Verstärkungskoeffizient (G(F)) zwischen dem ersten und zweiten Schwellenwert etwa 18 dB/Oktave beträgt.

7. System nach einem der Ansprüche 4 bis 6, **dadurch gekennzeichnet, dass** der Verstärkungskoeffizient (G(F)) etwa 3 dB/Oktave oberhalb des zweiten Schwellenwerts beträgt.

8. System nach einem der Ansprüche 1 bis 7, **dadurch gekennzeichnet, dass** das zentrale Gehäuse (1) Mittel (8) zum Frequenzmultiplexen der downstream-Signale umfasst, wobei das Fern-Gehäuse (4) entsprechende Demultiplexmittel (10) aufweist.

9. System nach einem der Ansprüche 1 bis 7, **dadurch gekennzeichnet, dass** das zentrale Gehäuse (1) Mittel (8) zum Zeitmultiplexen der downstream-Signale umfasst, wobei das Fern-Gehäuse (4) entsprechende Demultiplexmittel (10) aufweist.

10. System nach Anspruch 9, **dadurch gekennzeichnet, dass** die Mittel zum Abschwächung der downstream-Signale in einen Wiederherstellungsfilter (21) integriert sind, der einem Digital-Analog-Umwandler (20) nachgeschaltet angeordnet ist, der an die Demultiplexmittel (10) des Fern-Gehäuses (4) angeschlossen ist.

11. System nach Anspruch 10, **dadurch gekennzeichnet, dass** der Wiederherstellungsfilter eine Steilheit (P1, P2, P3) aufweist, die mit der Frequenz wechselt, sodass die downstream-Signale entsprechend dem genannten Abschwächungskoeffizienten abgeschwächt werden.
